(19) Europäisches Patentamt
European Patent Office
Office européen des brevets

(11) Veröffentlichungsnummer: **0 234 014 B1**

(12) **EUROPÄISCHE PATENTSCHRIFT**

(45) Veröffentlichungstag der Patentschrift: **21.07.93**

(51) Int. Cl.$^5$: **C08B 37/14**

(21) Anmeldenummer: **86116804.5**

(22) Anmeldetag: **03.12.86**

# (54) Verfahren zur Verätherung von Galaktomannanen.

(30) Priorität: **15.02.86 DE 3604795**

(43) Veröffentlichungstag der Anmeldung:
**02.09.87 Patentblatt 87/36**

(45) Bekanntmachung des Hinweises auf die Patenterteilung:
**21.07.93 Patentblatt 93/29**

(84) Benannte Vertragsstaaten:
**BE DE ES FR GB IT SE**

(56) Entgegenhaltungen:
**GB-A- 1 136 842**

**Patents Abstracts of Japan, Band 5, Nr.94(C-59)(766), 19.06.1981; & JP-A 5636501**

**Chemicals Abstracts, Band 93, Nr.18, 03.11 1980, Seite 281, Zusammenfassung 172598n, Columbus, Ohio,US; M.S.Y:Bhatty et al.:"Interaction of alkalies with Hydrating and hydrated calcium silicates"**

(73) Patentinhaber: **Degussa Aktiengesellschaft**
**Weissfrauenstrasse 9**
**W-6000 Frankfurt am Main 1(DE)**

(72) Erfinder: **Stober, Reinhard, Dr.**
**Bornwiesenweg 22**
**W-6467 Hasselroth(DE)**
Erfinder: **Fischer, Wolfgang**
**Hanauer Landstrasse 20**
**W-8756 Kahl(DE)**
Erfinder: **Huss, Michael**
**Richard-Wagner-Strasse 18 a**
**W-6236 Eschborn(DE)**

EP 0 234 014 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Trockenverfahren zur Verätherung von Galaktomannanen durch Umsetzung mit Alkylidenepoxiden in Gegenwart von Wasser in alkalischem Medium.
Gaktomannane sind eine wichtige Gruppe von pflanzlichen Hydrokolloiden, welche als Reservekohlehydrate, analog der Stärke, vor allem im Samenendosperm vieler Leguminosen vorkommen. Von praktisch industrieller Bedeutung sind jedoch nur das Guaran (Guar-Gummi) und das Carubin (Johannisbrotkernmehl). Guaran kommt im Endosperm der Guarbohnen (Cyamopsis tetragonoloba L.) vor, welche zur Ordnung der Leguminosen, Familie Papilionaceae, gehören. Guar ist eine alte Kulturpflanze, die heute vor allem in Indien, Pakistan und Texas in großem Maßstab angebaut wird.

Guaran enthält 64 % Mannose und 36 % Galaktose. Die in beta-(1,4)-glykosidischer Bindung verknüpften Mannosebausteine bilden lange, unverzweigte Ketten, an welche einzelne Galaktosemoleküle in alpha-(1,6)-Bindungen angehängt sind. Sowohl Mannose als auch Galaktose liegen in Pyranoseform vor. Das mittlere Molekulargewicht von Guaran liegt bei 220000. Guaran ist kaltwasserlöslich.

Native und modifizierte Galaktomannane auf der Basis von Guar- und Johannisbrotkernmehlen werden heute industriell auf den verschiedensten Gebieten angewendet. So z. B. in der Erdöl-, Textil-, Papier-, Lebensmittel-, Pharma-, Kosmetik- und Strengstoff-industrie sowie im Bergbau und in der Wasseraufbereitung. Bei der Papierherstellung sind die nativen Galaktomannane als "Wet end Additive" zur Steigerung der Papierfestigkeiten schon seit Jahren bekannt. Durch Modifizierung können die Eigenschaften der Produkte verstärkt werden, bzw. es entstehen Produkte mit völlig neuen Eigenschaften.

Um die natürliche Affinität von Galaktomannanen zur Zellulose zu verbessern und dadurch eine bessere Retention der Feinfasern erreichen zu könnnen, gibt es die Möglichkeit der Kationisierung von Galaktomannanen.
Aus der EP-A-0146911 ist ein Verfahren bekannt, bei dem man 2,3-Epoxypropyltrimethylammoniumchlorid in einem alkalischen wässrigen Medium bei 52 °C umsetzt.

Gemäß EP-A-0130946 führt man diese Reaktion ebenfalls in einem alkalischen Medium durch, das jedoch zusätzlich Natriumtetraborat enthält und vor dem Zusatz des Kationisierungsreagenses teilweise durch Essigsäure neutralisiert wird.

Die GB-PS 1 136 842 enthält genauere Angaben über Produkte, wie man sie bei der Umsetzung von 2,3-Epoxypropyltrimethylammoniumchloridmit Galaktomannanen in einem alkalischen, wässrigen Medium enthält.

Gemäß diesen Druckschriften muß das kationierte Produkt vor der Weiterverwendung getrocknet , anschließend gemahlen und gesiebt werden.

Aufgabe der Erfindung ist ein Verfahren zur Veräthertung von Galaktomannanen, bei dem nur kurzzeitig Rührenergie aufzuwenden ist, und die kationisierten Galaktomannane ohne weitere Nachbehandlung (Absieben, Trocknen etc.) weiterverarbeitet werden können.

Gegenstand der Erfindung ist ein Verfahren zur Verätherung von Galaktomannanen mit Alkylidenepoxiden in alkalischem Meidum in Gegenwart von Waser, das dadurch gekennzeichnet ist, daß man die Umsetzung bei 5 bis 60 °C in Gegenwart einer feinteiligen Kieselsäure durchführt. Der pH-Wert eines so modifizierten Galaktomannans liegt bei ≧9 (1 Gew.-%ige Lösung). Zur Verätherung von Galaktomannane noch dem erfindungsgemäßen Verfahren können native oder modifizierte Galaktomannane oder Galaktomannane enthaltende Substanzen beliebiger Herkunf t eingesetzt werden. Mit besonderem Vorteil wird natives Guar-Kernmehl verwendet.
Erfindungsgemäß erfolgt die Verätherung der Galaktomannane mit Alkylidenepoxiden der allgemeinen Formeln

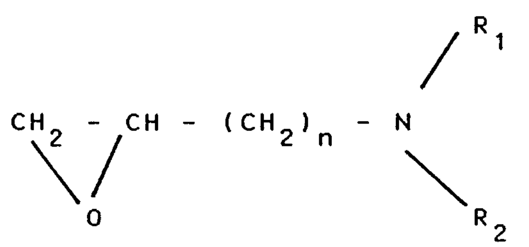

(I)

oder vorzugsweise

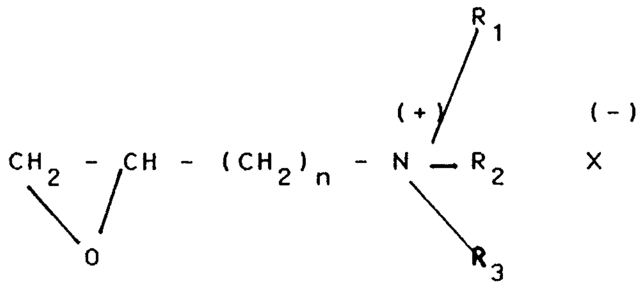

(II)

in der n 1, 2 oder 3 bedeutet, $R_2$ und $R_3$ gleiche oder verschiedene Alkylreste mit 1 bis 4 Kohlenstoffatomen, $R_1$ einen Alkylrest mit 1 bis 4 Kohlenstoffatomen oder Benzyl und $X^{(-)}$ Chlorid, Bromid, Sulfat oder Acetat bedeuten. Bevorzugt ist das 2,3-Epoxypropyltrimethylammoniumchlorid.

Eine Variante des erfindungsgemäßen Verfahrens besteht darin, die Umsetzung mit den oben genanten Epoxiden in Gegenwart von 0,5 bis 5 Gew.-% eine Verbindung erfolgen zu lassen, die einer der folgenden Formeln entspricht.

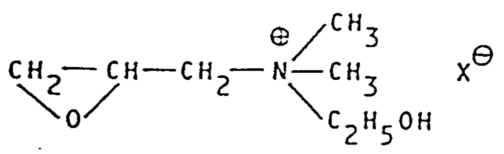

(III)

oder 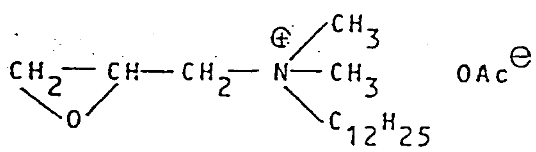

(IV)

oder 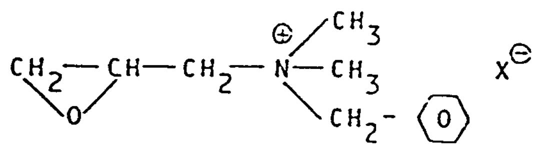

(V)

Diese Verbindungen werden vorzugsweise im Gemisch mit den Epoxiden gemäß den Formeln (I) oder (II) eingesetzt und können darin auch in Form der zugehörigen Chlorhydrine vorliegen. Epoxide gemäß (V) jedoch nur, wenn nicht schon Epoxide gemaß (II) mit n = 1 und R = Benzyl eingesetzt werden.
Spätestens im Reaktionsmedium erfolgt dann die Umwandlung zu den Epoxiden entsprechend den Formeln (III) bis (V), die mit den Galaktomannanen reagieren. Gemische dieser Art stellt man vorteilhaft her, indem man bei der Herstellung der Epoxide entsprechend der Formel (I), wie z. B. in der DE-OS 2902755 für die Herstellung von Glycidyltrimethylammoniumchlorid beschrieben wird, die zur Bildung der erfindungsgemäß vorgeschriebenen Anteile der Epoxide mit den Formeln (III) (V) notwendigen Mengen der entsprechenden tertiären Amine einsetzt.

Man kann diese Epoxide bzw. Chlorhydrine aber auch getrennt herstellen und mit den Epoxiden gemäß den Formeln (I) oder (II) im vorgeschriebenen Verhältnis vermischen.

Im allgemeinen ist es zweckmäßig, je Mol Galaktomannan, berechnet als Anhydroglukoseeinheit (Molmasse 162,15) in der Trockensubstanz, etwa 0,005 bis 0,5 Mol Epoxid vorzugsweise 0,05 bis 0,30 Mol Epoxid, anzuwenden.

Die spezifischen Oberflächen der eingesetzten, feinteili gen Kieselsäuren liegen zwischen 60 und 700 $m^2/g$, bevorzugt 100 und 450 $m^2/g$ (BET-Messung nach DIN 66131, $N_2$-Adsorption bei der Temperatur des flüssigen Stickstoffs, vorheriges Ausheizen der Probe bei 110 °C).

Sie werden in einer Menge von 0,1 bis 3,0 , bevorzugt von 1,0 bis 2,0 Gew.%, bezogen auf das Galaktomannan (atro), verwendet.

Bevorzugt eingesetzt werden hydrophile gefällte Kieselsäuren mit einer spezifischen Oberfläche von 190 bis 450 $m^2$/g, insbesondere eine sprühgetrocknete gefällte Kieselsäure mit einer spezifischen Oberfläche von 190 $m^2$/g.

Erfindungsgemäß enthält das Reaktionsgemisch ein alkalisch wirkendes Hydroxid oder Oxid, insbesondere ein Alkalihydroxid oder Erdalkalihydroxid oder -oxid, insbesondere Calciumhydroxid oder -oxid, in einer Menge von0,5 bis 5,0 Gew.-%, insbesondere von 1,0 bis 3,0 Gew.%, und 10 bis 60 Gew.-%, bevorzugt 20 bis 30 Gew.-%, Wasser, alle Werte bezogen auf die Menge des eingesetzten Galaktomannans (atro).

In einer besonders geeigneten Ausführungsform setzt man Calciumhydroxid bzw. -oxid in Form einer pulverförmigen Abmischung mit feinteiliger hydrophiler Kieselsäure (im folgenden Text "Aktivator" genannt) ein.

Der Aktivator besteht aus 10 bis 50 Gew.-% Kieselsäure und 90 bis 50 Gew.-% Calciumhydroxid bzw. -oxid.

Erfindungsgemäß geht man dabei so vor, daß man das Gemisch aus Galaktomannan, Alkali- oder Erdalkalihydroxid bzw. -oxid, Kieselsäure und Alkylidenepoxid, das im allgemeinen als wässrige Lösung eingesetzt wird, in einem Intensivmischer homogenisiert.

Die Epoxidlösung wird zweckmäßigerweise fein verteilt, dem in handelsüblicher Form mit einem Wassergehalt von ca. 7 bis 15 Gew.-% vorliegenden Galaktomannan zugesetzt, vorzugsweise aufgesprüht.

Das alkalisch wirkende Oxid bzw. Hydroxid und die Kieselsäure können dem Galaktomannan vorher oder nachher zugesetzt werden.
Der pulverförmige Aktivator wird bevorzugt vor dem Zusatz der Epoxidlösung mit dem Galaktomannan vermischt
Verwendet man die wässrige Lösung z. B. eines Alkalihydroxids, trägt man Epoxidlösung und die alkalische Komponente bevorzugt gleichzeitig in das Mischaggregat ein, eine Möglichkeit, die natürlich auch für die pulverförmigen alkalischen Oxide oder Hydroxide besteht.

Das bei der Herstellung des Epoxids durch Umsetzung des entsprechenden Halogenhydrins mit alkalisch wirkenden Substanzen, wie z. B. Alkalihydroxid, anfallende Gemisch kann unmittelbar verwendet werden, wenn das dabei entstehende Alkalihalogenid im Endprodukt nicht stört (Korrosionsgefahr). Dieses wird weder gewaschen noch neutralisiert und kann direkt eingesetzt werden.

Die Kationisierungsreakion kann sowohl im Mischaggregat oder auch nach der Homogenisierung außerhalb in einem Lagersilo oder in den entsprechenden für den Versand vorgesehenen Verpackungen erfolgen.

Soll die Reaktion im Mischaggregat ablaufen, werden bei 30 bis 60 °C Ausbeuten von 40 - 60 % nach 6 bis 24 Stunden erzielt.

In der bevorzugten Ausführungsform geht man jedoch so vor, daß man das Reaktionsgemisch bei 5 bis 40 °C in dem Intensivmischer innerhalb von 10 Sekunden bis 25 Minuten homogenisiert, dann ausschleust und in dem vorgesehenen Lagerbehälter wie z. B. einem Silo die Kationisierungsreaktion bei denselben Temperaturen bis zum Ende ablaufen läßt.

Es erweist sich in diesem Falle als vorteilhaft, daß man bevorzugt in dem Temperaturbereich arbeitet, in dem sich in Abhängigkeit von z. B. jahreszeitlich bedingten Schwankungen der Umgebungstemperatur die Raumtemperatur von anspruchslosen Warenlagern bewegt, d. h. von 18 bis 30 °C, insbesondere 20 bis 25 °C.

Die nach dem erfindungsgemäßen Verfahren hergestellten kationischen Galaktomannane liegen im allgemeinen als feine trockene Pulver vor und können nach der Reaktion direkt eingesetzt werden.

Als Intensivmischer besonders geeignet sind z. B. Pflugscharmischer mit 1 oder mehreren Messerköpfen für diskontinuierliche und kontinuierliche Fahrweise oder Befeuchtungsdurchflußmischer speziell für den kontinuierlichen Betrieb.

Erfindungsgemäß sind also zusätzliche Reaktionsbehälter überflüssig, da das Reaktionsgemisch nach der intensiven Durchmischung in die für den Versand vorgesehenen Verpackungen oder in ein Lagersilo abgefüllt werden kann und dort abreagiert.

Die geringe Verweilzeit im Mischaggregat ermöglicht gleichzeitig die kontinuierliche Durchführung der Trockenkationisierung, während nach dem Stand der Technik, aufgrund der langen Mischzeiten, nur die absatzweise Kationisierung bekannt und sinnvoll war.

Die erfindungsgemäß hergestellten kationischen Galaktomannane eignen sich neben der Anwendung in der Erdöl-, Textil-, Pharma-, Kosmetik- und Sprengstoffindustrie auch als Einsatzstoff im Bergbau und bei der Wasseraufbereitung.

Als besonders vorteilhaft erweist sich der Einsatz kationischer Galaktomannane (hauptsächlich Guar) in der Papierindustrie. Hierbei werden Berstdruck, Reißlänge, Lagenfestigkeit, Retention, Blattformation und

die Verteilung der Fasern bei der Papierherstellung positiv beeinflußt.

Im Gegensatz zu nativem Guar ist kationischer Guar besser dispergierbar und neigt weniger zu Entwässerungsschwierigkeiten auf dem Sieb. Auch läßt sich der Stoff, während der Papierherstellung, bei einem Zusatz von kationischem Guar leichter mahlen. Kationischer Guar ist auch als Entwässerungshilfsmittel und Trocknungsbeschleuniger geeignet.

Folgende Aktivator-Typen wurden für die Kationisierung von Guar (Guaran) verwendet.

| Type | Zusammensetzung (Gew.-%) | Schüttdichte ($g/cm^3$) |
|---|---|---|
| PC-1 | 52 % Calciumhydroxid, 97%-ig<br>48 % (sprühgetrocknete Kieselsäure 190 $m^2/g$) KS | 0,18 |
| PC-2 | 75 % Calciumhydroxid, 97%-ig<br>25 % KS | 0,25 |
| PC-3 | 67 % Calciumhydroxid, 97%-ig<br>33 % KS | 0,22 |
| PC-4 | 90 % Calciumhydroxid, 97%-ig<br>10 % KS | 0,30 |

Die Analysenwerte wurden an ausgewaschenen Proben ermittelt (Isopropanol/Wasser 80/20 Gew.%).

Alle Prozentangaben in den Beispielen betreffen Gewichtsprozent.

Die Viskositäten wurden am Brookfield-Viskosimeter bei 25 °C und 100 U/min gemessen

Als Kieselsäure wurde in allen Beispielen eine sprühgetrocknete hydrophile Kieselsäure mit 190 $m^2/g$ spez. Oberfläche (BET) benutzt.

## Beispiele

Beispiel 1 (Guar, hochviskos, theor. Substitutionsgrad 0,20)

50 kg (0,2726 kMol) nativer Guar (Wassergehalt 11,6 %; Gehalt an unlöslichem Stickstoff 0,693 %) werden in einen Pflugscharmischer, welcher mit einem Messerkopf ausgerüstet ist, eingebracht. Nach der Zugabe von 1,768 kg Aktivator PC-2 wird 5 Minuten gemischt und innerhalb 5 Minuten 21,290 kg Reagenzlösung, welche 8,264 kg 2,3-Epoxypropyltrimethylammononiumchlord enthält, über eine Düse bei laufendem Mischer zudosiert. Es wird weitere 10 Minuten gemischt und in ein Vorratssilo eingefüllt. Nach einer Standzeit von 5 Tagen bei 20 °C wurde ein Gesamt-Stickstoffgehalt von 1,695 % analysiert (ausgewaschener Guar).

Dies entspricht einem Substitutionsgrad von 0,130 und einer Ausbeute von 65,1 %. Die Viskosität eines 1 Gew.%igen Guar-Kleisters lag bei 880 mPa•s gemessen am Brookfield-Viskosimeter nach 5 Minuten bei 25 °C und bei 100 U/min).

Beispiel 2 (Guar, niederviskos, theor. Substitutionsgrad 0,20)

50 kg (0,2738 kMol) nativer Guar (Wassergehalt 11,2 %; Gehalt an unlöslichem Stickstoff 0,607 %) werden in einen Pflugscharmischer eingebracht und mit 1,776 kg Aktivator PC-2 5 Minuten gemischt. Innerhalb 5 Minuten werden 22,790 kg Reagenzlösung (Gehalt: 8,304 kg 2,3-Epoxypropyltrimethylammoniumchlorid) eingedüst und weitere 10 Minuten gemischt und in ein Vorratssilo eingefüllt. Nach einer Lagerzeit von 5 Tagen bei 20 °C wurde ein Stickstoffgehalt von 1,718 % bestimmt. Der erhaltene Substitutionsgrad von 0,138 entspricht einer Ausbeute bei der Kationisierungsreaktion von 69,1 %. Die Viskosität eines 1 Gew.-%igen Guarkleisters lag bei 24 mPa.s (Brookfield-Viskosimeter nach 5 Minuten bei 25 °C bei 100 U/min.

Beispiel 3
wie Beispiel 1, jedoch theor. Substitutionsgrad 0,10

| | |
|---|---|
| Ansatzkonzentration: | 68 % atro Guar und 25 % Wasser |
| Aktivator: | 4 % PC-2; 2,3-Epoxypropyltrimethylammoniumchlorid 72 %ig; 5 Tage 20 °C; |
| Gesamtstickstoff: | 1,236 %; prakt. Substitutionsgrad = 0,067 |
| Ausbeute: | 66,8 %; Viskosität = 640 mPa.s. |

Beispiel 4
wie Beispiel 1, jedoch theor. Substitutionsgrad 0,40

| | |
|---|---|
| Ansatzkonzentration: | 53 % atro Guar und 25 % Wasser |
| Aktivator: | 4 % PC-2, 2,3-Epoxypropyltrimethylammoniumchlorid 72 %ig; 5 Tage 20 °C; |
| Gesamtstickstoff: | 2,377 %; prakt. Substitutionsgrad = 0,239 |
| Ausbeute: | 59,6 %; Viskosität = 870 mPa.s. |

Beispiel 5 theor. Substitutionsgrad 0,20
wie Beispiel 1, jedoch verschiedene Reaktionstemperaturen

| | |
|---|---|
| Ansatzkonzentration: | 61 % atro Guar und 25 % Wasser |
| Aktivator: | 4 % PC-2; 2,3-Epoxytrimethylammoniumchlorid 72 %ig |

a) Reaktionszeit: 14 Tage bei 5° C

Gesamt-Stickstoff = 1,515 %
prakt. Substitutionsgrad = 0,1045
Ausbeute = 52,3 %
Viskosität = 920 mPa.s

b) Reaktionszeit: 24 Stunden bei 50 °C

Gesamt-Stickstoff = 1,566 %
prakt. Substitutionsgrad = 0,112
Ausbeute = 55,8 %
Viskosität = 940 mPa.s

Beispiel 6 theor. Substitutionsgrad 0,20
wie Beispiel 1, jedoch Natriumhydroxid-Lösung

| | |
|---|---|
| Ansatzkonzentration: | 61 % atro Guar und 25 % Wasser |
| Aktivator: | 2 % NaOH; 1 % Kieselsäure; 2,3-Epoxypropyltrimethylammoniumchlorid 72 %ig; 5 Tage bei 20 °C |

Gesamt-Stickstoff = 1,591 %
prakt. Substitutionsgrad = 0,115
Ausbeute = 57,6 %
Viskosität = 760 mPa.s

Beispiel 7 theor. Substitutionsgrad 0,20
wie Beispiel 1, jedoch Natriumhydroxid-Pulver

Ansatzkonzentration: 61%atro Guar und 25 % Wasser 2,3-Epoxypropyltrimethylammoniumchlorid 72 %ig; 5 Tage bei 20 °C;
Aktivator: 2 % NaOH; 1 % Kieselsäure getrennt zugesetzt
Gesamt-Stickstoff = 1,651 %
prakt. Substitutionsgrad = 0,124
Ausbeute = 61,9 %
Viskostität = 164 mPa.s

Beispiel 8 theor. Substitutionsgrad 0,20
wie Beispiel 2, jedoch 1,326 kg Aktivator PC-3(≙3 Gew.%)

Ansatzkonzentration: 61 % atro Guar und 25 % Wasser (2,3-Epoxypropyltrimethymlammoniumchlorid 72 %ig; 5 Tage bei 20 °C;
Gesamt-Stickstoff = 1,725 %;
prakt. Substitutionsgrad = 0,147;
Ausbeute = 73,7 %;
Viskosität = 25 mPa.s.

Beispiel 9 theor. Substitutionsgrad 0,20
wie Beispiel 2, jedoch 0,888 kg Aktivator PC-1(≙2 Gew.%)

Ansatzkonzentration: 61 % atro Guar und 25 % Wasser (2,3-Epoxypropyltrimethylammoniumchlorid 72 %ig); 7 Tage bei 20 °C;
Gesamt-Stickstoff = 1,619 %;
prakt. Substitutionsgrad = 0,132;
Ausbeute = 65,8 %
Viskosität = 25 mPa.s

Beispiel 10 theor. Substitutionsgrad 0,20
wie Beispiel 2, jedoch 1,510 kg Aktivator PC-4(≙3,4 Gew.%) und Ansatzkonzentration 64%atro Guar

Ansatzkonzentration: 64 % atro Guar und 23 % Wasser (2,3-Epoxypropyltrimethylammoniumchlorid 72 %ig); 5 Tage bei 20 °C;
Gesamt-Stickstoff = 1,705 %;
prakt. Substitutionsgrad = 0,1444;
Ausbeute = 72,2 %;
Viskosität = 22 mPa.s

Beispiel 11 theor Substitutionsgrad 0,20
wie Beispiel 2, jedoch Ansatzkonzentration 58 % atro Guar

Ansatzkonzentration: 58 % atro Guar und 30 % Wasser (2,3-Epoxypropyltrimethylammoniumchlorid 72 %ig); 5 Tage bei 20 °C;
Aktivator:4 % PC-2
Gesamt-Stickstoff = 1,743 %;
prakt. Substitutionsgrad = 0,150;
Ausbeute = 75,0 %;
Viskosität = 19 mPa.s.

Beispiel 12 theor. Substitutionsgrad 0,20
wie Beispiel 2, jedoch Kationisierungsreagenz 15,847 kg3-Chlor-2-hydroxypropyltrimethylammoniumchlorid 65 %ig, vorher mit NaOH aktiviert + 4,381 kg NaOH 50 %ig + 2,562 kg Wasser

Ansatzkonzentration: 55 % atro Guar und 25 % Wasser 5 Tage bei 20 °C; Aktivator 4 % PC-2;
Gesamt-Stickstoff = 1,546 %;
prakt. Substitutionsgrad = 0,121;
Ausbeute = 60,5 %;
Viskosität = 25 mPa.s

Beispiel 13 theor. Substitutionsgrad 0,20
wie Beispiel 2, jedoch Kationisierungsreagenz 15,847 kg3-Chlor-2-hydroxypropyltrimethylammoniumchlorid 65 %ig; stöchiometrische Menge Calciumhydroxid zusätzlich zugemischt + 6,943 kg Wasser, zusätzlich 2,092 kg Calciumhydroxid 97 %ig zugemischt.

Ansatzkonzentration: 58 % atro Guar und 25 % Wasser 5 Tage bei 20 °C;
Aktivator:4 % PC-2
Gesamt-Stickstoff = 1,323 %;
prakt. Substitutionsgrad = 0,078 %;
Ausbeute = 38,8 %;
Viskosität = 24 mPa.s.

**Patentansprüche**

1. Verfahren zur Verätherung von Galaktomannanen durch Umsetzung mit Alkylidenepoxiden der allgemeinen Formeln

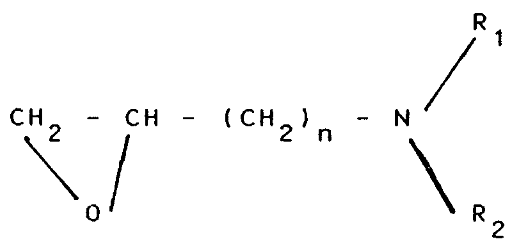
(I)

oder

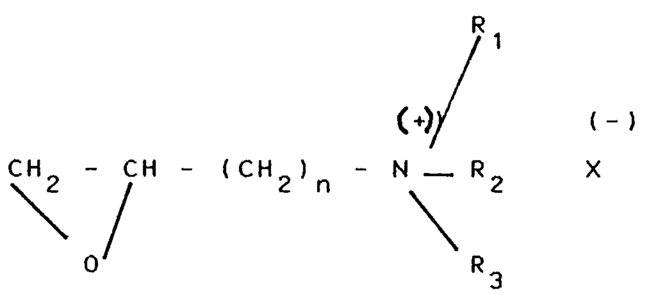
(II)

in denen n = 1, 2 oder 3 bedeutet, $R_2$ und $R_3$ gleiche oder verschiedene Alkylreste mit 1 bis 4 Kohlenstoffatomen, $R_1$ einen Alkylrest mit 1 bis 4 Kohlenstoffatomen oder den Benzylrest darstellen, und $X^{(-)}$ Chlorid, Bromid, Sulfat oder Acetat entspricht, in Gegenwart von Alaklimetall- oder Erdalkalimetallhydroxiden oder Erdalkalimetalloxiden und Wasser,
dadurch gekennzeichnet, daß man die Umsetzung bei 5 bis 60 °C in Gegenwart von 10 bis 60 Gew.-% Wasser, 0,5 bis 5,0 Gew.-% der genannten Hydroxide oder Oxide und 0,1 bis 3,0 Gew.-% einer feinteiligen Kieselsäure, deren spezifische Oberfläche zwischen 60 und 700 $m^2/g$ liegt, durchführt, wobei die Gew.-% bezogen sind auf das Galaktomannan (atro) , das Gemisch der Reaktanden in einem Intensivmischer homogenisiert wird, und der pH-Wert eines so modifizierten Galaktomannans bei ≧9 liegt (1 Gew.-%ige Lösung).

2. Verfahren gemäß Anspruch 1,
dadurch gekennzeichnet, daß man das Gemisch der Reaktanden innerhalb von 20 Sekunden bis 25 Minuten homogenisiert, dann ausschleust und in dem vorgesehenen Lagerbehältnis ausreagieren läßt.

3. Verfahren gemäß den Ansprüchen 1 und 2,
dadurch gekennzeichnet, daß man die Verätherung in Gegenwart von 0,5 bis 5 Gew.-% einer Verbindung, bezogen auf die Epoxide mit den Formeln I und II, durchführt die den folgenden Formeln entspricht:

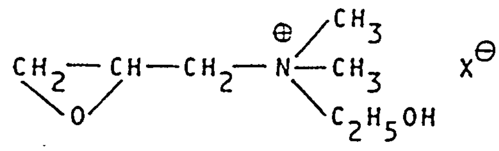 (III)

oder 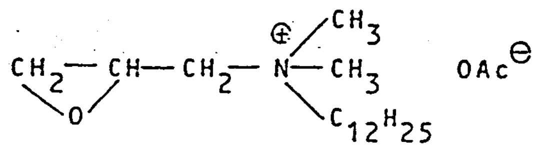 (IV)

oder 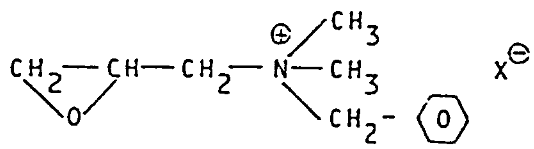 (V)

mit $X^{(-)}$ : Chlorid, Bromid, Sulfat oder Acetat, Epoxide gemäß (V) jedoch nur, wenn nicht schon Epoxide gemäß (II) mit n = 1 und R-Benzyl eingesetzt werden.

**4.** Verfahren gemäß den Ansprüchen 1 bis 3,
dadurch gekennzeichnet, daß man ein pulverförmiges Gemisch bestehend aus Kieselsäure und einem der genannten alkalisch wirkenden Hydroxide oder Oxide einsetzt.

**5.** Verfahren gemäß den Ansprüchen 1 bis 4,
dadurch gekennzeichnet, daß man als Kieselsäure eine hydrophile Kieselsäure einsetzt.

**6.** Verfahren gemäß den Ansprüchen 1 bis 5,
dadurch gekennzeichnet, daß man die Mischungsbestandteile in einem Pflugscharmischer mit einem oder mehreren Messerköpfen mischt.

**7.** Verfahren gemäß den Ansprüchen 1 bis 5,
dadurch gekennzeichnet, daß man die Mischungsbestandteile in einem Befeuchtungsdurchflußmischer mischt.

**Claims**

**1.** Process for the etherification of galactomannanes by a reaction with alkylidene epoxides corresponding to the general formula

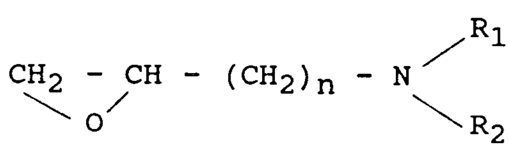 (I)

or

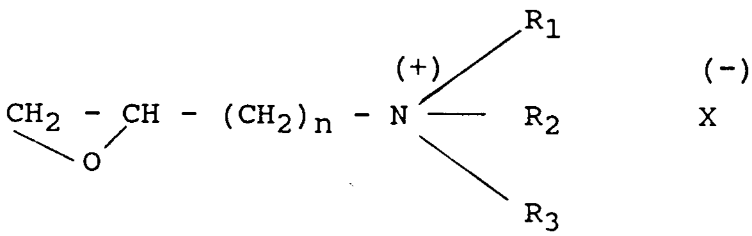

(II)

in which n = 1, 2 or 3, $R_2$ and $R_3$ are identical or different alkyl groups having 1 to 4 carbon atoms, $R_1$ denotes an alkyl group having 1 to 4 carbon atoms or the benzyl group and $X^{(-)}$ stands for chloride, bromide, sulphate or acetate in the presence of alkali metal or alkaline earth metal hydroxides or alkaline earth metal oxides and water, characterised in that the reaction is carried out at 5 to 60 °C in the presence of from 10 to 60% by weight of water, from 0.5 to 5.0% by weight of the aforesaid hydroxides or oxides and from 0.1 to 3.0% by weight of a finely divided silica whose specific surface area is from 60 to 700 $m^2/g$, the percentage by weight being based on the galactomannane (atro), the mixture of reactants is homogenised in an intensive mixer and the pH of a galactomannane thus modified is ≧9 (1% by weight solution).

**2.** A process according to Claim 1, characterised in that the mixture of reactants is homogenised within 20 seconds to 25 minutes and then flushed out and left to react in the storage container provided.

**3.** A process according to Claims 1 and 2, characterised in that etherification is carried out in the presence of from 0.5 to 5% by weight, based on the epoxides of formulae I and II, of a compound corresponding to one of the following formulae:

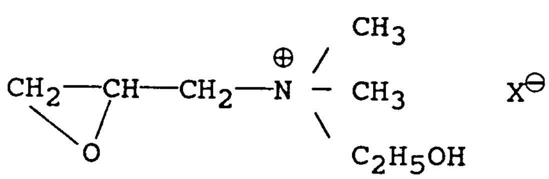

(III)

or

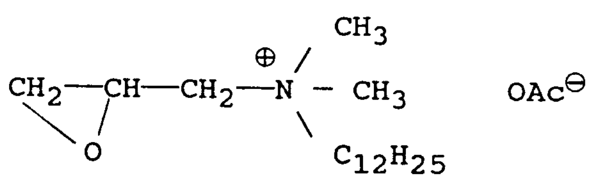

(IV)

or

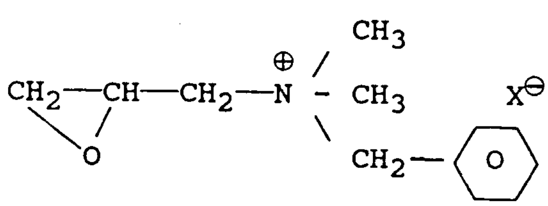

(V)

wherein $X^{(-)}$ denotes chloride, bromide, sulphate or acetate, but epoxides corresponding to formula (V) are only used if epoxides corresponding to formula (II) wherein n = 1 and R = benzyl are not already used.

**4.** A process according to Claims 1 to 3, characterised in that a pulverulent mixture consisting of silica and one of the above-mentioned alkaline hydroxides or oxides is used.

**5.** A process according to Claims 1 to 4, characterised in that the silica used is a hydrophilic silica.

6. A process according to Claims 1 to 5, characterised in that the components of the mixture are mixed in a ploughshare mixer having one or more knife heads.

7. A process according to Claims 1 to 5, characterised in that the components of the mixture are mixed in a moistening throughflow mixer.

**Revendications**

1. Procédé d'éthérification de galactomannanes avec des époxydes d'alkylidène de formules générales :

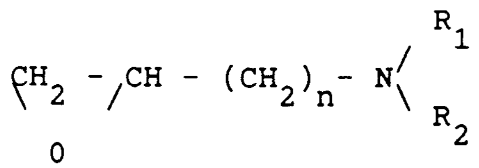

(I)

ou

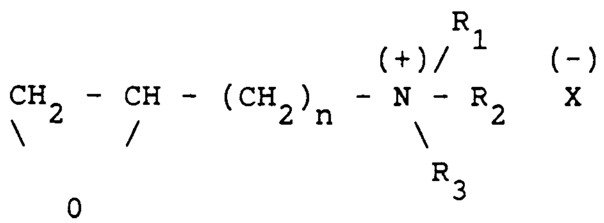

(II)

dans lesquelles n représente 1, 2 ou 3, $R_2$ ou $R_3$ sont des restes alkyle identiques ou différents de 1 à 4 atomes de carbone, $R_1$ est un reste alkyle de 1 à 4 atomes de carbone ou le benzyle et $X^{(-)}$ est le chlorure, bromure, sulfate ou acétate, en présence d'hydroxydes des métaux alcalins ou alcalinoterreux ou d'oxydes de métaux alcalinoterreux et d'eau,
caractérisé en ce qu'on réalise la réaction entre 5 et 60 °C en présence de 10 à 60 % en poids d'eau, 0,5 à 5,0 % en poids des hydroxydes ou oxydes cités et 0,1 à 3,0 % en poids d'une silice fine, dont la surface spécifique est comprise entre 60 et 700 $m^2/g$, les % en poids étant rapportés au galactomanne (en sec), ou homogénéise le mélange de réactifs dans un mélangeur énergique, et le pH d'un galactomanne ainsi modifié se situe à ≧ 9 (solution à 1 % en poids.

2. Procédé selon la revendication 1, caractérisé en ce qu'on homogénéise le mélange des réactifs en 20 secondes à 25 minutes, ensuite on vidange et on laisse réagir dans les conditions de stockage prévues.

3. Procédé selon la revendication 1 et 2, caractérisé en ce qu'on réalise l'éthérification en présence de 0,5 à 5 % en poids d'un composé, rapporté aux époxydes de formules (I) et (II), qui correspond aux formules suivantes :

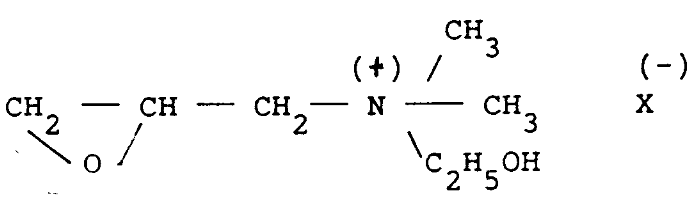

(III)

ou

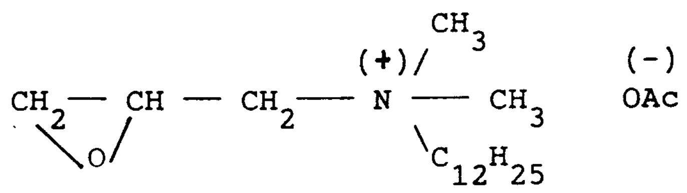

(IV)

ou

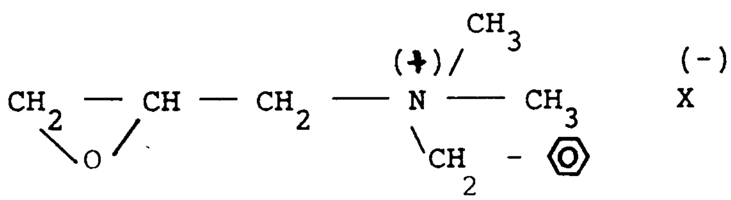

(V)

avec $X^{(-)}$ : chlorure, bromure, sulfate ou acétate, on utilise des époxydes selon (V) seulement si on n'utilise pas déjà des époxydes selon (II) avec n = 1 et R = benzyle.

**4.** Procédé selon les revendications 1 à 3, caractérisé en ce qu'on utilise un mélange en poudre constitué de silice et d'un oxyde ou hydroxyde cité à effet alcalin.

**5.** Procédé selon les revendications 1 à 4, caractérisé en ce qu'on utilise comme silice une silice hydrophile.

**6.** Procédé selon les revendications 1 à 5, caractérisé en ce qu'on mélange les composants du mélange dans un mélangeur à socs avec une ou plusieurs têtes à couteaux.

**7.** Procédé selon les revendications 1 à 5, caractérisé en ce qu'on mélange les composants du mélange dans un mélangeur en continu d'humidification.